# EUROPÄISCHE PATENTSCHRIFT

(11) **EP 1 425 702 B1**
(45) Veröffentlichungstag und Bekanntmachung des Hinweises auf die Patenterteilung: **08.11.2006**
(21) Anmeldenummer: 02779340.5
(22) Anmeldetag: 12.09.2002
(51) Int. Cl.: G06K 7/08, G06K 19/067, B65D 85/10, B65B 19/02, A24C 5/00, B31B 3/00, B65C 9/00, G01S 13/02

(54) **Verpackungsmaschine mit Transponder**
Packaging machine provided with a transponder
Machine d'emballage munie d'un transpondeur

(30) Priorität: 14.09.2001 DE 10145413
(43) Veröffentlichungstag der Anmeldung: 09.06.2004
(60) Teilanmeldung: 06011916.1
(73) Patentinhaber: Focke & Co. (GmbH & Co. KG), 27283 Verden (DE)
(72) Erfinder: FOCKE, Heinz, 27283 Verden (DE); JACOBI, Tobias, 22041 Hamburg (DE); ENGEL, Gisbert, 27308 Luttum (DE)
(74) Vertreter: Bolte, Erich
(86) Internationale Anmeldenummer: PCT/EP2002/010239
(87) Internationale Veröffentlichungsnummer: WO 2003/025833

(56) Entgegenhaltungen:
- EP-A- 0 762 535
- EP-A- 0 858 948
- WO-A-00/46734
- WO-A-01/80139
- DE-A- 3 706 114
- DE-A- 19 647 670
- DE-A- 19 908 878
- DE-A- 19 954 750
- US-A- 4 708 704
- US-A- 4 742 470
- US-A- 4 802 027

## Beschreibung

Die Erfindung betrifft eine Verpackungsmaschine gemäß Oberbegriff des Anspruchs 1.

Verpackungsmaschinen für Zigaretten mit auswechselbarem Faltrevolver sind bekannt (EP 0 858 948). Die Auswechslung der Faltrevolver erfolgt zu Wartungs- und Reparaturzwecken. Anspruch 1 ist gegen diese Druckschrift abgegrenzt.

Der Einsatz von Transpondern zur Anbringung an unterschiedlichen Gegenständen und zur Speicherung von Informationen ist für verschiedene Anwendungsbereiche bekannt, so zur Anbringung an Packungen, und zwar auch an Zigarettenpackungen, wobei die Transponder abgabenrechtliche Informationen enthalten (WO 00/46734). Auch zur Kennzeichnung von in einem Magazin bereitgehaltenen Werkzeugen sind Transponder zur Identifizierung der betreffenden Werkzeuge an einer Werkzeugmaschine bekannt (US 4 742 470). Die Herstellung von elektronischen Datenträgern ist beispielhaft in US 4 802 027 beschrieben.

In der Zigarettenindustrie ist es bekannt, Behälter - sogenannte Schragen - für den Transport der Zigaretten von einer Herstellmaschine zu einer Verpackungsmaschine mittels Transponder zu kennzeichnen (DE 37 06114). Des Weiteren sind Transponder eingesetzt worden, um das Vorhandensein von Bauteilen zu überprüfen, zum Beispiel in einem Fahrzeug (DE 199 08 878).

Bei der Erfindung geht es darum, in einer Verpackungsmaschine für Zigaretten sicherzustellen, dass wegen eines Markenwechsels ("brand change") oder aus anderen Gründen auszutauschende Aggregate dahingehend überprüft werden, dass sie für den herzustellenden Packungstyp bestimmt sind.

Zur Lösung dieser Aufgabe ist die erfindungsgemäße Verpackungsmaschine entsprechend den Merkmalen des Anspruchs 1 ausgebildet.

Der am Faltrevolver angebrachte Transponder gewährleistet in Verbindung mit dem Lesegerät und der angeschlossenen Auswerteeinheit die korrekte Zuordnung des Faltrevolvers zum herzustellenden Packungstyp.

Für die Fertigung von Zigarettenpackungen mit Rundkanten ist gemäß einem weiteren Vorschlag ein Rundungsaggregat ebenfalls mit einem Transponder und einem Lesegerät ausgerüstet. Diese Anordnung gewährleistet, dass ohne Bedienungseingriff das Rundungsgerät stillgesetzt wird, wenn Zigarettenpackungen ohne Rundkanten gefertigt werden.

Weitere Einzelheiten der Erfindung werden nachfolgend anhand der Zeichnungen näher erläutert. Es zeigt:
- Fig. 1: eine Verpackungsmaschine für die Herstellung von Zigarettenpackungen in schematischer Seitenansicht,
- Fig. 2: ein Aggregat der Verpackungsmaschine gemäß Fig. 1, nämlich ein Zuschnittapparat, in schematischer Seitenansicht, bei vergrößertem Maßstab,
- Fig. 3: einen Faltrevolver einer Verpackungsmaschine in schematischem Grundriss,
- Fig. 4: einen Teilschnitt des Faltrevolvers gemäß Fig. 3 in der Schnittebene III-III bei vergrößertem Maßstab.

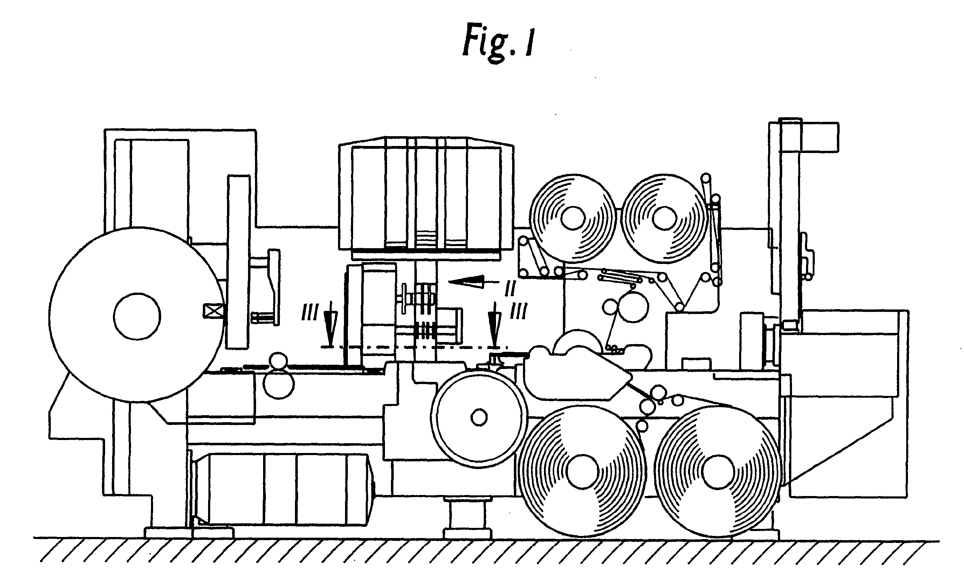

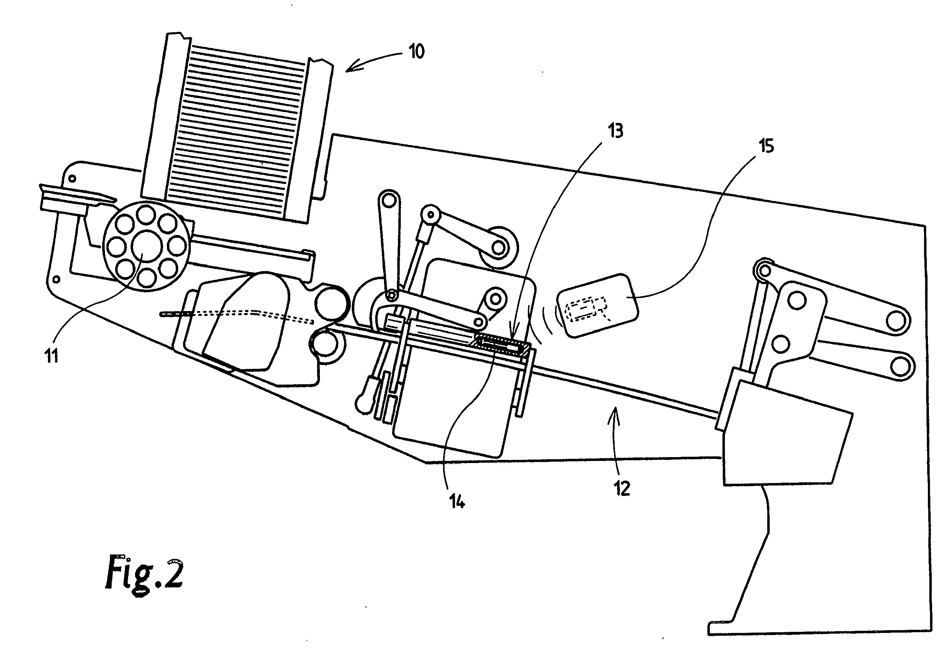

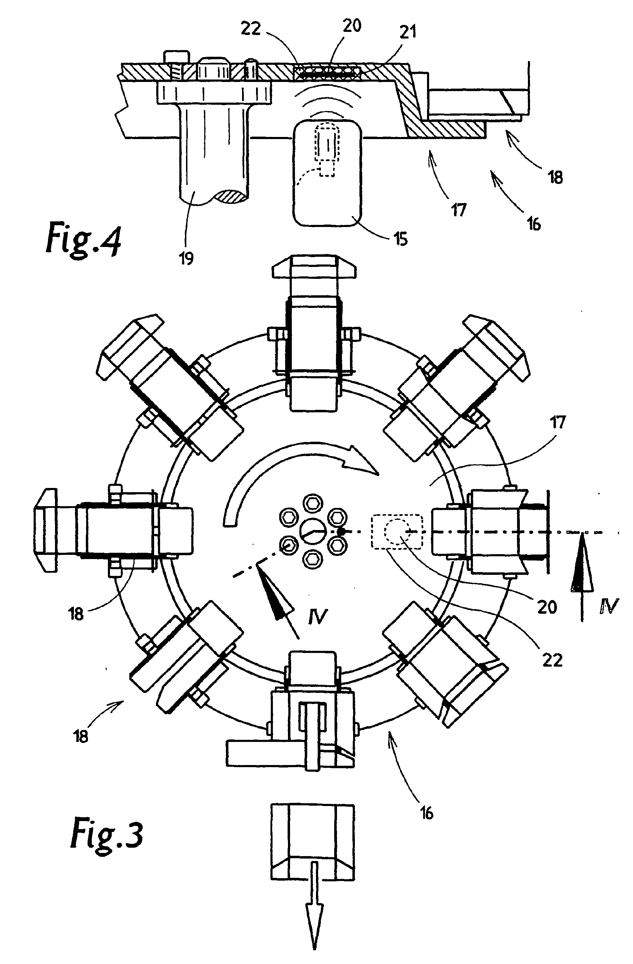

Fig. 1 zeigt in Seitenansicht eine Verpackungsmaschine für die Herstellung von Zigarettenpackungen des Typs Klappschachtel, und zwar mit abgerundeten Packungskanten - Rundkantenkanten-Klappschachtel. Die Maschine besteht aus einer Mehrzahl von Aggregaten. Als Beispiele sind ein Zuschnittaggregat (Fig. 2) und ein Faltrevolver (Fig. 3, Fig. 4) gezeigt.

Das im Aufbau bekannte Zuschnittaggregat gemäß Fig. 2 weist ein Zuschnitt-Magazin 10 auf, dem nacheinander Zuschnitte durch einen sogenannten Abroller 11 entnehmbar sind. Die Zuschnitte werden einer Zuschnittbahn 12 zugeführt. In deren Bereich sind verschiedene Werkzeuge angebracht, die Faltungen bzw. Verformungen an dem Zuschnitt ausführen. Bei der Fertigung von Rundkanten-Packungen werden abgerundete Packungskanten vorgeformt, und zwar durch Falten von Seitenlappen des Zuschnitts mit Hilfe von Formwerkzeugen, nämlich im vorliegenden Falle von Rundungswalzen 13. Aufbau und Arbeitsweise dieses Aggregats sind bekannt aus US 4 708 704.

Die Vorrichtung gemäß Fig. 2 soll insgesamt oder hinsichtlich einzelner Elemente gekennzeichnet sein, so dass eine exakte Zuordnung, insbesondere auch die Identifizierung der Herkunft möglich ist. Zu diesem Zweck ist an dem Zuschnittaggregat gemäß Fig. 2 mindestens ein entsprechend programmierter Transponder 14 angebracht. Die Besonderheit besteht darin, dass der Transponder 14 geschützt bzw. verdeckt angebracht ist, so dass Manipulationen, nämlich Zerstörungen, Veränderungen etc., also unbefugte Eingriffe nicht möglich sind. Zu diesem Zweck ist der Transponder 14 in ein Maschinenelement eingebettet. Bei dem gezeigten Ausführungsbeispiel ist ein zylindrischer bzw. stabförmiger Transponder in die Rundungswalze 13 eingebettet. Diese besteht aus einem formbaren Material, welches die Radiofrequenzwellen ungestört passieren lässt. In dem gezeigten Falle besteht der Träger des Transponders 14, also die Rundungswalze 13, aus Kunststoff. Beim Formen des Maschinenelements wird der Transponder 14 eingebettet. Alternativ kann der Transponder 14 nachträglich in eine entsprechende Ausnehmung eingesetzt und diese durch eine Abdeckung geschlossen werden.

Die Daten des Transponders 14 werden in der Maschine überprüft. Bei dem Zuschnittaggregat geht es um Daten, die die Zuordnung der herausnehmbaren Einheit für den betreffenden Anwendungsfall beinhalten. Die Daten werden durch ein Lesegerät 15 erfasst. Das Lesegerät 15 ist mit einer (zentralen) Auswerteeinheit verbunden, um die erfassten Daten zu verarbeiten. Insbesondere wird ein Fehlersignal erzeugt, wenn anhand der erkannten und ausgewerteten Daten des Transponders 14 ein fehlerhaftes Maschinenteil identifiziert ist. Das Lesegerät 15 ist in der Verpackungsmaschine bzw. im Bereich des Zuschnittaggregats so positioniert, dass es auf den zugeordneten Transponder 14 gerichtet und benachbart zu diesem angeordnet ist.

Ein zentrales Organ einer Verpackungsmaschine ist ein Faltrevolver 16. Dieser ist im vorliegenden Falle so ausgebildet, dass ein flacher, tellerförmiger Träger 17 um eine vertikale Achse drehbar ist. Am Außenumfang des Trägers 17 sind Taschen 18 angebracht, je zur Aufnahme eines Zuschnitts bzw. einer Packung.

Der Faltrevolver 16 bzw. dessen Träger 17 ist ein Auswechselaggregat der Verpackungsmaschine. Der Träger 17 ist lösbar (mittels Schrauben) auf dem oberen Ende eines aufrechten Wellenzapfens 19 befestigt.

Um bei einem Wechsel des Faltrevolvers 16 bzw. des Trägers 17 sicherzustellen, dass die korrekte Ausführung dieses Wechselaggregats eingesetzt ist, weist der Faltrevolver 16 einen (flachen, scheibenförmigen) Transponder 20 auf. Dieser ist an der Unterseite des Trägers 17 angebracht. Dem Transponder 20 ist auch hier ein Lesegerät 15 zugeordnet. Dieses ist ebenfalls unterhalb des Faltrevolvers 16 bzw. des Trägers 17 ortsfest positioniert, derart, dass mindestens in einer bestimmten (Montage-)Stellung der Transponder 20 dem Lesegerät 15 gegenüberliegt. Auch dieses Lesegerät 15 ist mit der zentralen Auswerteeinheit verbunden.

Eine Besonderheit besteht darin, dass der Transponder 20 nicht außen an dem Maschinenelement, nämlich am Träger 17, angebracht, sondern in diesen eingebettet ist. Der Träger 17 weist eine eingeformte bzw. eingearbeitete Ausnehmung 21 auf. In diese ist ein Tragkörper 22 mit dem eingebetteten Transponder 20 eingesetzt. Der Tragkörper 22 kann aus Kunststoff bestehen, jedenfalls aus einem für die Technologie des Transponders 20 neutralen Werkstoff. Der Transponder 20 ist geschützt und gesichert gegen unbefugte Veränderung.

## Patentansprüche

1. Verpackungsmaschine zum Herstellen von Zigarettenpackungen (41), mit einem Faltrevolver (16), der an einem Träger (17) Taschen (18) für Zuschnitte bzw. Packungen aufweist, **gekennzeichnet durch** folgende Merkmale:
a) am Faltrevolver (16) ist ein Transponder (20) mit gespeicherten Daten zur Identifizierung des Faltrevolvers (16) angebracht,
b) der Transponder (20) ist in eine Wandung des Trägers (17) eingebettet, nämlich in einer Ausnehmung (21) angeordnet,
c) in der Verpackungsmaschine ist ein elektronisches Lesegerät (15) ortsfest im Bereich des Transponders (20) angeordnet,
d) das Lesegerät (15) ist mit einer zentralen Auswerteeinheit verbunden.

2. Verpackungsmaschine nach Anspruch 1, **dadurch gekennzeichnet, dass** der Faltrevolver (16) mit dem flachen, tellerförmigen Träger (17) auf einem oberen Ende eines aufrechten Wellenzapfens (19) angeordnet und an diesem mittels Schrauben lösbar befestigt ist.

3. Vorrichtung nach Anspruch 1 oder 2, **dadurch gekennzeichnet, dass** für die Fertigung von Zigarettenpackungen mit gerundeten Packungskanten im Bereich einer zum Faltrevolver (16) führenden Zuschnittbahn (12) ein Aggregat zum Vorformen von Rundkanten von Zuschnitten angeordnet ist, und zwar mit Rundungswalzen (13), wobei in die Rundungswalzen (13) ein Transponder (14) eingebettet und ein auf den Transponder (14) gerichtetes Lesegerät (15) angeordnet ist.

## Claims

1. A packaging machine for the production of cigarette packs (41), with a folding turret (16) that has pockets (18) for blanks or packs on a carrier (17), **characterized by** the following features:
a) attached to the folding turret (16) is a transponder (20) with stored data for the purpose of identifying the folding turret (16),
b) the transponder (20) is embedded in a wall of the carrier (17), namely disposed in a recess (21),
c) in the packaging machine, an electronic read unit (15) is arranged in a stationary position in the region of the transponder (20),
d) the read unit (15) is connected to central evaluation unit.

2. The packaging machine according to Claim 1, **characterized in that** the folding turret (16) with the flat, plate-shaped carrier (17) is disposed at a top end of an upright shaft journal (19) and detachably attached to the latter by means of screws.

3. The packaging machine according to Claim 1 or 2, **characterized in that**, for the production of cigarette packs with rounded pack edges, an assembly for the pre-shaping of rounded edges of blanks is arranged in the region of a blanks path (12) leading to the folding turret (16), specifically by means of rounding rollers (13), with a transponder (14) being embedded in the rounding rollers (13) and a read unit (15) being directed at the transponder (14).

## Revendications

1. Empaqueteuse pour la fabrication de paquets de cigarettes (41), comportant un revolver de pliage (16) qui présente sur un support (17) des poches (18) pour des découpes ou des paquets, **caractérisé par** les caractéristiques suivantes :
a) sur le revolver de pliage (16) est monté un transpondeur (20) qui contient des données en mémoire pour l'identification du revolver de pliage (16),
b) le transpondeur (20) est encastré dans une paroi du support (17), plus précisément agencé dans un évidement (21),
c) un appareil de lecture électronique (15) est monté fixe dans l'empaqueteuse dans la zone du transpondeur (20),
d) l'appareil de lecture (15) est relié à une unité centrale d'exploitation.

2. Empaqueteuse selon la revendication 1, **caractérisée par le fait que** le revolver de pliage (16) est monté avec le support (17), plat et en forme d'assiette, sur l'extrémité supérieure d'un tourillon vertical (19) et fixé de manière amovible à celui-ci par des moyens de vissage.

3. Dispositif selon l'une des revendications 1 et 2, **caractérisé par le fait que** pour la fabrication de paquets de cigarettes à arêtes arrondies, dans la zone d'une voie de découpes (12) allant au revolver de pliage (16) est placé un équipement de préformage d'arêtes rondes de découpes qui comporte des rouleaux arrondisseurs (13), un transpondeur (14) étant encastré dans les rouleaux arrondisseurs (13) et un appareil de lecture (15) étant dirigé vers le transpondeur (14).
